# EUROPEAN PATENT APPLICATION

(11) **EP 3 782 959 A1**
(43) Date of publication of application: **24.02.2021**
(21) Application number: 19841326.2
(22) Date of filing: 18.07.2019
(51) Int. Cl.: C02F 1/20, B01D 19/00, C10K 1/10

(54) **TREATMENT APPARATUS FOR ENERGY-GAS PURIFICATION WASTEWATER AND TREATMENT METHOD FOR ENERGY-GAS PURIFICATION WASTEWATER**

(30) Priority: 26.07.2018 JP 2018139970
(71) Applicant: Mitsubishi Heavy Industries Engineering, Ltd., Yokohama-shi, Kanagawa 220-8401 (JP)
(72) Inventor: YOSHIDA, Kaori, Yokohama-shi, Kanagawa 220-8401 (JP); KAN, Rikio, Takasago-shi, Hyogo 676-8686 (JP); KAKESAKO, Seiji, Takasago-shi, Hyogo 676-8686 (JP)
(74) Representative: Studio Torta S.p.A.
(86) International application number: PCT/JP2019/028189
(87) International publication number: WO 2020/022170

(57) **Abstract**

A treatment apparatus 100 for treating wastewater produced by purification of an energy gas and containing at least an ammonium ion includes a decompression facility 10 for reducing a pressure of the wastewater, an alkaline agent addition facility 20 for adding an alkaline agent to the wastewater whose pressure has been reduced, and an ammonia stripping facility 30 for stripping ammonia in the wastewater to which the alkaline agent has been added.

## Description

### TECHNICAL FIELD

The present disclosure relates to a treatment apparatus for energy gas purification wastewater and a treatment method for energy gas purification wastewater.

### BACKGROUND

Energy gas obtained by gasification of hydrocarbon such as coal, biomass, or heavy oil contains carbon monoxide and hydrogen. Thus, energy gas can be used as fuel for a gas turbine, for example. However, energy gas also contains components such as ammonia due to gasification of hydrocarbon. Therefore, it is preferable to remove components such as ammonia in energy gas by purifying the energy gas before using the energy gas as fuel, for example.

As the energy gas purification technique, a technique disclosed in Patent Document 1 is known. Patent Document 1 discloses a washing column for removing ammonia in the energy gas (especially see paragraph 0015). Further, it is disclosed that wastewater of the washing column is supplied to a stripper after adjusting pH to alkaline in a pH adjustment tank (especially see paragraph 0018). Further, it is disclosed that, in the stripper, ammonia is separated as gas by decompression and heating of the wastewater.

### Citation List

### Patent Literature

Patent Document 1: JP2006-232904A

### SUMMARY

### Problems to be Solved

In wastewater from an energy gas purification device such as a washing column, generally, carbon dioxide in the air is dissolved. Accordingly, wastewater contains carbonic acid. However, the technique disclosed in Patent Document 1 does not consider carbonic acid in wastewater. Therefore, the pH of wastewater may be reduced due to carbonic acid in the wastewater, and the amount of an alkaline agent added to make the pH of wastewater alkaline increases.

At least one embodiment of the present invention relates to a treatment apparatus for energy gas purification wastewater and a treatment method for energy gas purification wastewater whereby it is possible to reduce the addition amount of an alkaline agent.
(1) According to at least one embodiment of the present invention, a treatment apparatus for energy gas purification wastewater for treating wastewater produced by energy gas purification and containing at least ammonium ion and chloride ion comprises: a decompression facility for reducing a pressure of the wastewater; an alkaline agent addition facility for adding an alkaline agent to the wastewater whose pressure has been reduced; and an ammonia stripping facility for stripping ammonia in the wastewater to which the alkaline agent has been added.
   With the above configuration (1), in the decompression facility, carbonic acid in the wastewater can be stripped to the gas phase as carbon dioxide. As a result, the pH of the wastewater can be increased, and the addition amount of the alkaline agent for stripping ammonia can be reduced.
(2) In some embodiments, in the above configuration (1), the decompression facility includes a decompression container having an interior space for reducing the pressure of the wastewater to be lower than a pressure upstream of the decompression facility. The decompression container includes: a wastewater inlet for introducing the wastewater into the interior space; an alkaline agent inlet for introducing the alkaline agent into the interior space; and a wastewater outlet for discharging the wastewater containing the alkaline agent and reduced in pressure.
   With the above configuration (2), in the interior space of the decompression container, the alkaline agent can be added to the wastewater after stripping carbon dioxide by decompression. Thus, in the interior space, the wastewater and the alkaline agent can be easily mixed. Further, it is possible to extend the time from the addition of the alkaline agent in the decompression container to reaching the ammonia stripping facility disposed downstream of the decompression facility. As a result, it is possible to promote the mixing of the alkaline agent into the wastewater before reaching the ammonia stripping facility.
(3) In some embodiments, in the above configuration (2), the decompression facility is configured to reduce a pressure of the interior space to a target pressure equal to or higher than an atmospheric pressure.
   With the above configuration (3), when the pressure is reduced from a pressure higher than the target pressure to the target pressure equal to or higher than the atmospheric pressure, gas and liquid can co-exist in the interior space, and the wastewater containing the alkaline agent and reduced in pressure can be easily discharged.
(4) In some embodiments, in any one of the above configurations (1) to (3), the alkaline agent addition facility is configured to add the alkaline agent into a connection pipe connecting the decompression facility and the ammonia stripping facility.
   With the above configuration (4), a pipe for supplying the alkaline agent can be connected to the connection pipe. Thereby, the alkaline agent addition facility can be easily retrofitted.
(5) In some embodiments, in any one of the above configurations (1) to (4), the treatment apparatus comprises: a pH meter for measuring a pH of the wastewater after the stripping; and a control device for controlling an addition amount of the alkaline agent. The control device is configured to control the addition amount of the alkaline agent based on the pH measured by the pH meter.
   With the above configuration (5), the time from the addition of the alkaline agent to the pH measurement can be extended. Thus, the mixing of the alkaline agent into the wastewater can be promoted from the addition of the alkaline agent to the pH measurement, and the stability of the measurement can be improved.
(6) In some embodiments, in the above configuration (5), the control device is configured to control the addition amount of the alkaline agent such that the pH measured by the pH meter is 8 to 12.
   With the above configuration (6), the stripping of ammonia can be promoted by making the pH of the wastewater alkaline.
(7) In some embodiments, in any one of the above configurations (1) to (6), the ammonia stripping facility includes a heating facility for heating the wastewater to which the alkaline agent has been added.
   With the above configuration (7), the stripping of ammonia can be promoted by heating.
(8) In some embodiments, in the above configuration (7), the heating facility includes a heat exchanger for performing heat exchange between a heating gas and the wastewater to which the alkaline agent has been added.
   With the above configuration (8), even when the wastewater flow rate is high, the wastewater can be heated.
(9) In some embodiments, in the above configuration (7) or (8), the heating facility includes a steam injection device for injecting steam to the wastewater to which the alkaline agent has been added.
   With the above configuration (9), the wastewater can be rapidly heated by contact with steam injected to the heating facility.
(10) In some embodiments, in any one of the above configurations (7) to (9), the heating facility includes a tower container. The tower container includes: an inlet for introducing the wastewater to which the alkaline agent has been added; a heating part for heating the introduced wastewater; a wastewater outlet for discharging the heated wastewater; and a gas outlet for discharging ammonia stripped by heating of the wastewater.
   With the above configuration (10), the stripping of ammonia can be promoted by increasing the wastewater amount that can be simultaneously heated in the tower container.
(11) According to at least one embodiment of the present invention, a treatment method for energy gas purification wastewater for treating wastewater produced by energy gas purification and containing at least ammonium ion and chloride ion comprises: a decompression step of reducing a pressure of the wastewater; an alkaline agent addition step of adding an alkaline agent to the wastewater after reducing the pressure; and an ammonia stripping step of stripping ammonia in the wastewater after adding the alkaline agent.

With the above method (11), carbonic acid in the wastewater can be stripped to the gas phase as carbon dioxide by decompression. As a result, the pH of the wastewater can be increased, and the addition amount of the alkaline agent for stripping ammonia can be reduced.

### Advantageous Effects

At least one embodiment of the present invention provides a treatment apparatus for energy gas purification wastewater and a treatment method for energy gas purification wastewater whereby it is possible to reduce the addition amount of an alkaline agent.

### BRIEF DESCRIPTION OF DRAWINGS

FIG. 1 is a system diagram of a treatment apparatus for energy gas purification wastewater according to a first embodiment of the present invention.
FIG. 2 is a flowchart of a treatment method for energy gas purification wastewater according to a first embodiment of the present invention.
FIG. 3 is a system diagram of a treatment apparatus for energy gas purification wastewater according to a second embodiment of the present invention.
FIG. 4 is a system diagram of a treatment apparatus for energy gas purification wastewater according to a third embodiment of the present invention.
FIG. 5 is a system diagram of a treatment apparatus for energy gas purification wastewater according to a fourth embodiment of the present invention.
FIG. 6 is a system diagram of a treatment apparatus for energy gas purification wastewater according to a fifth embodiment of the present invention.

### DETAILED DESCRIPTION

Embodiments of the present invention will now be described in detail with reference to the accompanying drawings. However, the following embodiments and the drawings are illustrative only, and various modifications may be applied as long as they do not depart from the object of the present invention. Further, two or more embodiments may be optionally combined in any manner. Further, in the following embodiments, similar elements will be indicated by the same reference numerals, and redundant descriptions thereof will be omitted for convenience.

It is intended, however, that unless particularly specified, dimensions, materials, shapes, relative positions and the like of components described in the embodiments shall be interpreted as illustrative only and not intended to limit the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

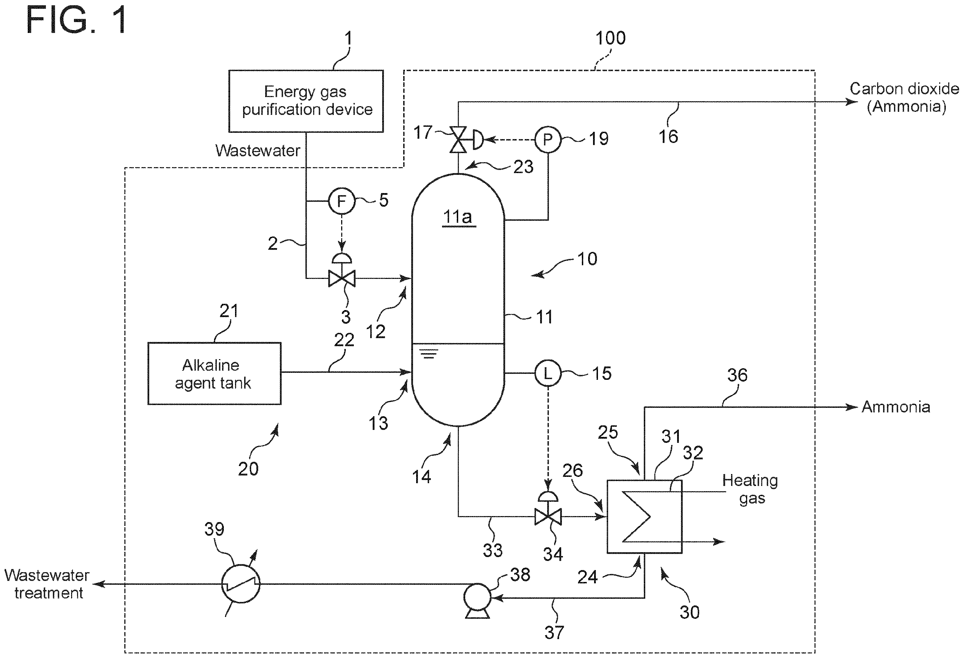

FIG. 1 is a system diagram of a treatment apparatus 100 for energy gas purification wastewater (hereinafter, simply referred to as treatment apparatus 100) according to a first embodiment of the present invention. The treatment apparatus 100 is to treat wastewater produced by purification of an energy gas and containing at least an ammonium ion and a chloride ion. The energy gas includes a gasification gas obtained by gasification of hydrocarbon such as coal, biomass, or heavy oil. The wastewater produced by energy gas purification is discharged from an energy gas purification device 1 composed of, for example, a scrubber. The wastewater is generally acidic.

The treatment apparatus 100 includes a decompression facility 10, an alkaline agent addition facility 20, and an ammonia stripping facility 30. The decompression facility 10 serves to reduce the pressure of the wastewater discharged from the energy gas purification device 1. The alkaline agent addition facility 20 serves to add an alkaline agent to the wastewater whose pressure has been reduced. The ammonia stripping facility 30 serves to strip ammonia in the wastewater to which the alkaline agent has been added. Among them, the alkaline agent addition facility 20 is connected to an alkaline agent inlet 13 (described later) of the decompression facility 10. Further, the ammonia stripping facility 30 is connected to a wastewater outlet 14 (described later) of the decompression facility 10.

The decompression facility 10 includes a decompression container 11 having an interior space 11a for reducing the pressure of the wastewater discharged from the energy gas purification device 1 to be lower than a pressure upstream of the decompression facility 10. The decompression container 11 is composed of, for example, a decompression drum.

The pressure upstream of the decompression facility 10 is the pressure inside a pipe of a wastewater introduction system 2 (described later) and may be for example 2 MPaG to 4 MPaG. Accordingly, the pressure of the interior space 11a of the decompression facility 10 is lower than the pressure in the pipe (pressure upstream of wastewater inlet 12 described later). Specifically, although details will be described later, the pressure of the interior space 11a may be for example about 0.01 MPaG to 0.1 MPaG. Accordingly, the pressure of the wastewater introduced into the interior space 11a through the pipe is reduced. The reduction in pressure of the wastewater in the interior space 11a facilitates the stripping of carbonic acid contained in the wastewater to the gas phase as carbon dioxide and the removing of carbonic acid from the wastewater.

The decompression container 11 includes a wastewater inlet 12 for introducing the wastewater into the interior space 11a, an alkaline agent inlet 13 for introducing the alkaline agent into the interior space 11a, a wastewater outlet 14 for discharging the wastewater containing the alkaline agent and reduced in pressure, and a gas outlet 23 for discharging a gas including carbon dioxide to the outside of the decompression container 11.

The wastewater inlet 12 is connected to the energy gas purification device 1 with a wastewater introduction system 2 composed of a pipe, for example. The wastewater introduction system 2 includes an opening degree adjustment valve 3 for controlling the wastewater introduction amount to the decompression facility 10, and a flow rate meter 5 for measuring the flow rate of the wastewater flowing through the wastewater introduction system 2. Further, a control device (not shown) controls the opening degree of the opening degree adjustment valve 3 such that the flow rate measured by the flow rate meter 5 is constant. Thus, the wastewater is introduced into the decompression facility 10 such that the wastewater introduction amount to the decompression facility 10 is constant. The wastewater inlet 12 is composed of a nozzle (not shown), for example.

The alkaline agent inlet 13 is connected to the alkaline agent addition facility 20 with an alkaline agent introduction system 22 composed of a pipe, for example. Thereby, in the decompression facility 10, while the pressure of the wastewater is reduced, the alkaline agent is added to the wastewater with the reduced pressure. By the addition of the alkaline agent to the wastewater, the pH of the wastewater is made alkaline. Thus, the ammonium ion in the wastewater is converted to ammonia, and the stripping of ammonia to the gas phase in the downstream ammonia stripping facility 30 is promoted. The alkaline agent inlet 13 is composed of, for example, a nozzle (not shown) disposed below the liquid level in the interior space 11a.

The alkaline agent supplied from the alkaline agent addition facility 20 includes, for example, an aqueous sodium hydroxide solution and an aqueous potassium hydroxide solution. The alkaline agent addition facility 20 includes an alkaline agent tank 21 for storing the alkaline agent to be introduced into the decompression facility 10, an alkaline agent introduction system 22, and a pump (not shown) for flowing the alkaline agent through the alkaline agent introduction system 22.

The wastewater outlet 14 is connected to the ammonia stripping facility 30 with a wastewater discharge system 33 composed of a pipe, for example. The wastewater discharge system 33 includes an opening degree adjustment valve 34 for controlling the wastewater discharge amount from the decompression facility 10. The decompression facility 10 includes a liquid level meter 15 for measuring the liquid level of the wastewater in the interior space 11a. Further, the control device (not shown) controls the opening degree of the opening degree adjustment valve 34 such that the liquid level measured by the liquid level meter 15 is constant. Thus, the wastewater is discharged from the decompression facility 10 such that the wastewater discharge amount from the decompression facility 10 is constant.

The gas outlet 23 is connected to the outside of the treatment apparatus 100 with a gas discharge system 16 composed of a pipe, for example. Thus, the gas produced in the interior space 11a of the decompression container 11 is supplied to, for example, a combustor (not shown) through the gas discharge system 16 and combusted in the combustor. The gas produced in the interior space 11a contains carbon dioxide stripped to the gas phase by decomposition and ammonia similarly stripped to the gas phase by decomposition.

The alkaline agent is difficult to spread through the wastewater immediately after the alkaline agent is added in the interior space 11a, so that the pH of the wastewater in the interior space 11a may significantly vary with the position. Accordingly, the amount of ammonia stripped from the wastewater in the interior space 11a is generally not so much. On the other hand, in the ammonia stripping facility 30 into which the wastewater sufficiently mixed with the alkaline agent is introduced, the pH of the wastewater is increased as a whole (for example, about 8 to 12), so that the conversion of the ammonium ion into ammonia (molecule) is promoted, and the stripping of ammonia in the wastewater is promoted by heating. Consequently, most of ammonia in the wastewater from the energy gas purification device 1 is usually stripped in the ammonia stripping facility 30.

The gas discharge system 16 includes an opening degree adjustment valve 17 for controlling the gas discharge amount from the decompression facility 10. The decompression facility 10 includes a pressure gauge 19 for measuring the pressure of the interior space 11a. Further, the control device (not shown) controls the opening degree of the opening degree adjustment valve 17 such that the pressure measured by the pressure gauge 19 is constant. Thus, the gas is discharged from the decompression facility 10 such that the pressure of the interior space 11a of the decompression facility 10 is constant.

The decompression facility 10 is configured to reduce the pressure of the interior space 11a to a target pressure (for example, 0.01 MPaG to 0.1 MPaG, as described above) equal to or higher than the atmospheric pressure. The pressure adjustment to the target pressure can be performed by adjusting the opening degree of the opening degree adjustment valve 17, for example. Further, as needed, a pressure reducing pump (not shown) may be used. By reducing the pressure of the interior space 11a to the target pressure, when the pressure is reduced from a pressure (e.g., 2 MPaG to 4 MPaG) higher than the target pressure to the target pressure (e.g., 0.01 MPaG to 0.1 MPaG) equal to or higher than the atmospheric pressure, gas and liquid can co-exist in the interior space 11a, and the wastewater containing the alkaline agent and reduced in pressure can be easily discharged.

Since the decompression facility 10 includes the decompression container 11, in the interior space 11a of the decompression container 11, the alkaline agent can be added to the wastewater after stripping carbon dioxide by decompression. Thus, in the interior space 11a, the wastewater and the alkaline agent can be easily mixed. Further, it is possible to extend the time from the addition of the alkaline agent in the decompression container 11 to reaching the ammonia stripping facility 30 disposed downstream of the decompression facility 10. As a result, it is possible to promote the mixing of the alkaline agent into the wastewater before reaching the ammonia stripping facility 30.

The ammonia stripping facility 30 connected to the wastewater discharge system 33 includes a heating facility 31 for heating the wastewater to which the alkaline agent has been added. Since the ammonia stripping facility 30 includes the heating facility 31, the stripping of ammonia can be promoted by heating. The heating facility 31 is, for example, a kettle type and includes a heat exchanger 32 for performing heat exchange between a heating gas and the wastewater to which the alkaline agent has been added. The heating gas include, for example, steam. Since the heating facility 31 includes the heat exchanger 32, even when the wastewater flow rate is high, the wastewater can be heated.

The heating facility 31 includes a wastewater inlet 26 for introducing the wastewater to which the alkaline agent has been added, a gas outlet 25 for discharging a gas containing ammonia stripped by heating the wastewater, and a wastewater outlet 24 for discharging the heated wastewater. The wastewater inlet 26 is connected to the wastewater outlet 14 of the decompression facility 10 through the wastewater discharge system 33.

The gas outlet 25 is connected to the outside of the treatment apparatus 100 with a gas discharge system 36 composed of a pipe, for example. Thus, the gas containing ammonia produced in the heating facility 31 is supplied to, for example, a combustor (not shown) through the gas discharge system 36 and combusted in the combustor.

Further, the wastewater outlet 24 is connected to the outside of the treatment apparatus 100 with a wastewater discharge system 37 composed of a pipe, for example. Thus, the wastewater (containing anions such as chloride ion) heated in the heating facility 31 is supplied to a wastewater treatment facility (not shown) through the wastewater discharge system. At this time, the heated wastewater flows through the wastewater discharge system 37 by driving of a pump 38 included in the wastewater discharge system 37. Further, the heated wastewater radiates heat by a heat exchanger 39 included in the wastewater discharge system 37 and then is supplied to the wastewater treatment facility.

With the treatment apparatus 100, in the decompression facility 10, carbonic acid in the wastewater can be stripped to the gas phase as carbon dioxide. As a result, the pH of the wastewater can be increased, and the addition amount of the alkaline agent for stripping ammonia can be reduced.

The ammonia stripping facility 30 may include, instead of the heating facility 31, a bubbling device (not shown) for stripping ammonia by bubbling, for example.

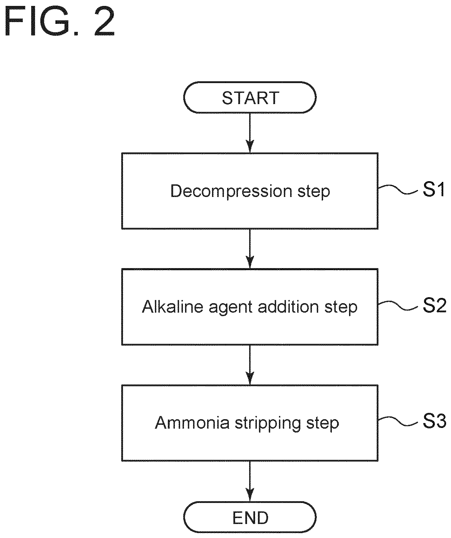

FIG. 2 is a flowchart of a treatment method for energy gas purification wastewater according to a first embodiment of the present invention. The flowchart shown in FIG. 2 can be performed with the above-described treatment apparatus 100. Therefore, FIG. 2 will be described while referring to FIG. 1.

The treatment method for energy gas purification wastewater according to the first embodiment of the present invention (hereinafter, simply referred to as treatment method of the present embodiment) is to treat wastewater produced by purification of an energy gas and containing at least an ammonium ion and a chloride ion. The treatment method of the present embodiment includes a decompression step S1, an alkaline agent addition step S2, and an ammonia stripping step S3.

The decompression step S1 is a step of reducing the pressure of the wastewater discharged from the energy gas purification device 1 composed of, for example, a scrubber. The decompression step S1 is performed in the decompression facility 10. The reduction in pressure facilitates the stripping of carbonic acid contained in the wastewater to the gas phase as carbon dioxide and removing carbonic acid from the wastewater. Further, ammonia (molecule) contained in the wastewater is also easily stripped to the gas phase. The stripped gas such as carbon dioxide and ammonia is combusted in a combustor (not shown), for example.

The alkaline agent addition step S2 is a step of adding an alkaline agent to the wastewater after reducing the pressure. The alkaline agent addition step S2 can be performed by adding the alkaline agent to the wastewater whose pressure has been reduced in the interior space 11a of the decompression facility 10, for example. By the addition of the alkaline agent to the wastewater, the pH of the wastewater is made alkaline. Thus, the ammonium ion in the wastewater is converted to ammonia, and the stripping of ammonia to the gas phase in the ammonia stripping step S3, which will be described later, is promoted.

The ammonia stripping step S3 is a step of stripping ammonia in the wastewater after adding the alkaline agent. The stripping of ammonia can be performed by heating the wastewater in the heating facility 31, for example. The heating facilitates the stripping of ammonia in the wastewater to the gas phase. The stripped gas such as ammonia is combusted in a combustor (not shown), for example.

With the treatment method of the present embodiment, carbonic acid in the wastewater can be stripped to the gas phase as carbon dioxide by decompression. As a result, the pH of the wastewater can be increased, and the addition amount of the alkaline agent for stripping ammonia can be reduced.

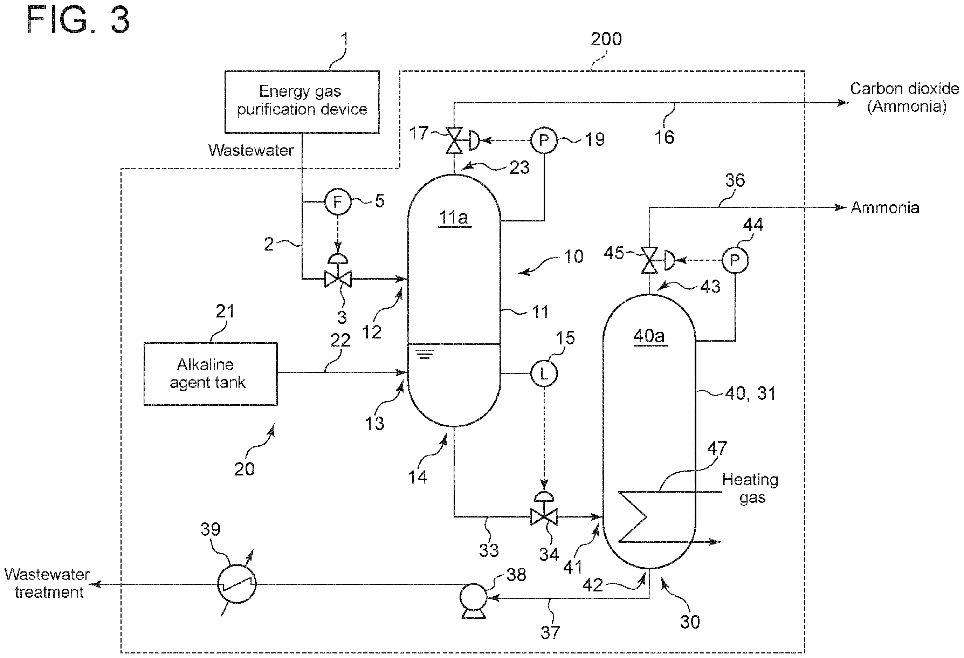

FIG. 3 is a system diagram of a treatment apparatus 200 for energy gas purification wastewater (hereinafter, simply referred to as treatment apparatus 200) according to a second embodiment of the present invention. The ammonia stripping facility 30 of the treatment apparatus 200 includes, as with the ammonia stripping facility 30 of the treatment apparatus 100 described above, a heating facility 31 for heating the wastewater to which the alkaline agent has been added. However, the heating facility 31 of the treatment apparatus 200 includes a tower container 40 composed of, for example, an ammonia stripper. The tower container 40 has an interior space 40a for heating the wastewater by a heating part 47 (described later).

The tower container 40 includes an inlet 41 for introducing the wastewater to which the alkaline agent has been added, a heating part 47 for heating the introduced wastewater, a wastewater outlet 42 for discharging the heated wastewater, and a gas outlet 43 for discharging ammonia stripped by heating of the wastewater. Among them, the heating part 47 is composed of, for example, a heat exchanger for performing heat exchange between a heating gas and the wastewater to which the alkaline agent has been added. The heating gas include, for example, steam. Since the tower container 40 includes the heat exchanger, even when the wastewater flow rate is high, the wastewater can be heated.

The gas outlet 43 of the tower container 40 is connected to the gas discharge system 36. The gas discharge system 36 includes an opening degree adjustment valve 45 for controlling the gas discharge amount from the heating facility 31. The tower container 40 includes a pressure gauge 44 for measuring the pressure of the interior space 40a. Further, the control device (not shown) controls the opening degree of the opening degree adjustment valve 45 such that the pressure measured by the pressure gauge 44 is constant. Thus, the gas is discharged from the tower container 40 such that the pressure of the interior space 40a of the tower container 40 is constant. The pressure of the interior space 40a is in the same pressure range as the interior space 11a of the decompression facility 10, and is preferably higher than the pressure of the gas discharge system 36.

Since the heating facility 31 includes the tower container 40, the stripping of ammonia can be promoted by increasing the wastewater amount that can be simultaneously heated in the tower container 40.

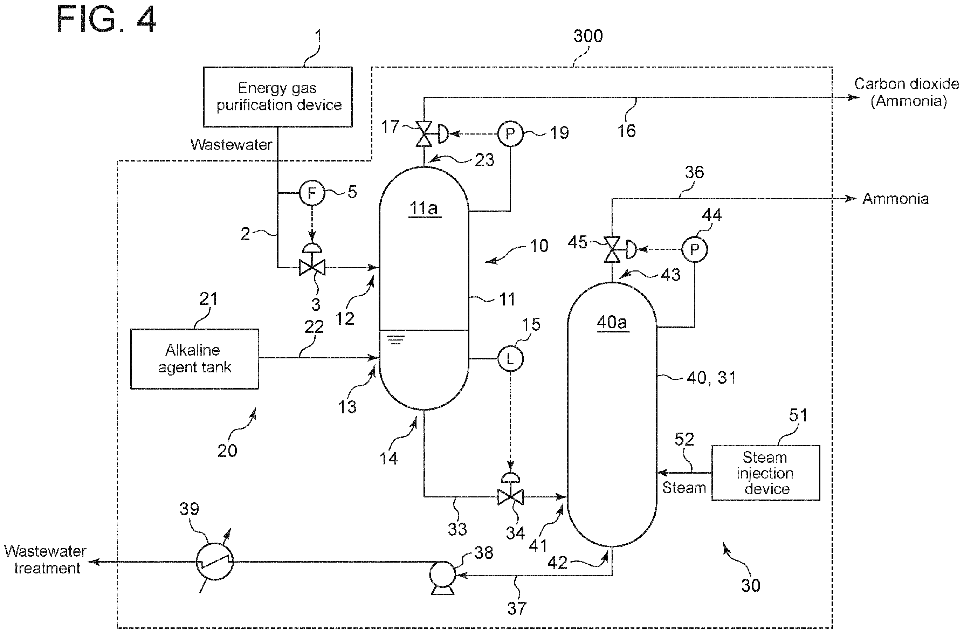

FIG. 4 is a system diagram of a treatment apparatus 300 for energy gas purification wastewater (hereinafter, simply referred to as treatment apparatus 300) according to a third embodiment of the present invention. The heating facility 31 of the treatment apparatus 300 includes a steam injection device 51 for injecting steam to the wastewater to which the alkaline agent has been added. Steam produced in the steam injection device 51 is injected to the interior space 40a of the tower container 40 through a steam injection system 52.

Since the heating facility 31 includes the steam injection device 51, the wastewater can be rapidly heated by contact with steam injected to the interior space 40a of the heating facility 31.

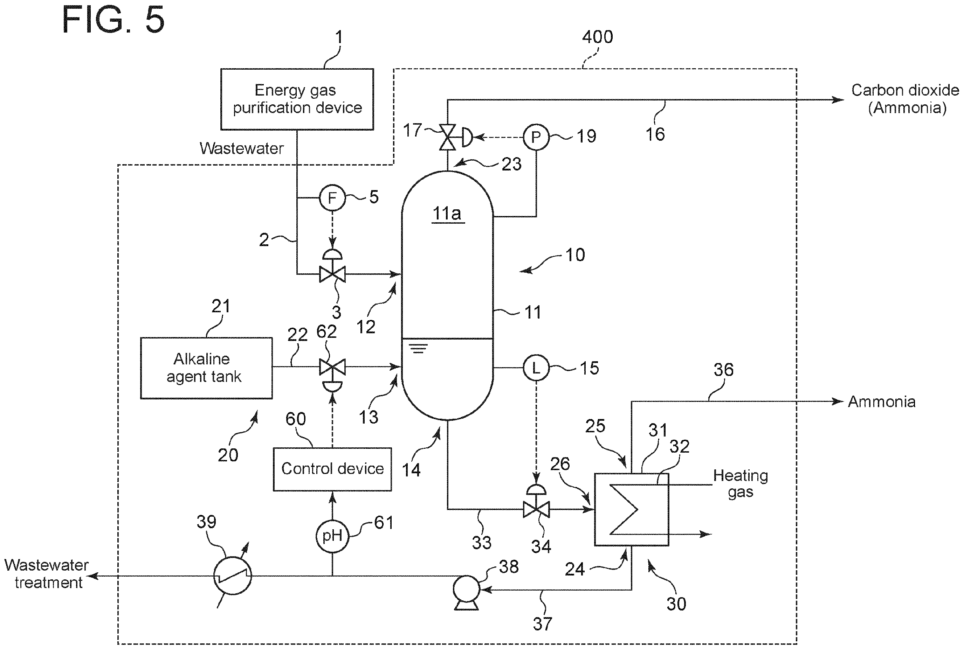

FIG. 5 is a system diagram of a treatment apparatus 400 for energy gas purification wastewater (hereinafter, simply referred to as treatment apparatus 400) according to a fourth embodiment of the present invention. The treatment apparatus 400 includes a pH meter 61 for measuring the pH of the wastewater after the stripping of ammonia; and a control device 60 for controlling the addition amount of the alkaline agent. The control device 60 is configured to control the addition amount of the alkaline agent based on the pH measured by the pH meter 61.

Thereby, the wastewater after adding the alkaline agent flows through the wastewater outlet 14, the wastewater discharge system 33, the heating facility 31, and the wastewater discharge system 37 in this order, and the pH of the wastewater flowing through the wastewater discharge system 37 is measured. Thus, the time (retention time) from the addition of the alkaline agent to the pH measurement can be extended. Thus, the mixing of the alkaline agent into the wastewater can be promoted from the addition of the alkaline agent to the pH measurement, and the stability of the measurement can be improved.

The wastewater discharge system 37 includes the pH meter 61 for measuring the pH of the wastewater after the stripping of ammonia. The alkaline agent introduction system 22 included in the alkaline agent addition facility 20 includes an opening degree adjustment valve 62 for controlling the alkaline agent addition amount to the decompression facility 10.

The control device 60 is configured to control the addition amount of the alkaline agent by adjusting the opening degree of the opening degree adjustment valve 62 such that the pH measured by the pH meter 61 is 8 to 12. Thereby, the stripping of ammonia can be promoted by making the pH of the wastewater alkaline.

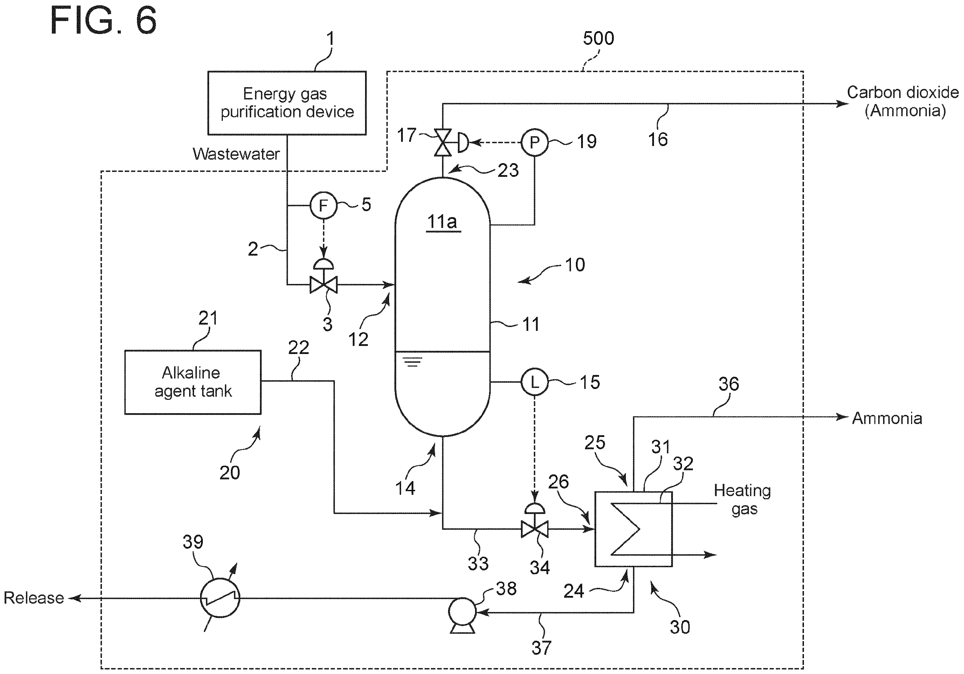

FIG. 6 is a system diagram of a treatment apparatus 500 for energy gas purification wastewater (hereinafter, simply referred to as treatment apparatus 500) according to a fifth embodiment of the present invention. In the treatment apparatus 500, unlike the treatment apparatuses 100 to 400, the alkaline agent introduction system 22 is connected to the wastewater discharge system 33. Accordingly, the alkaline agent addition facility 20 of the treatment apparatus 500 is configured to add the alkaline agent into a connection pipe (wastewater discharge system 33) connecting the decompression facility 10 and the ammonia stripping facility 30.

By adding the alkaline agent into the connection pipe (wastewater discharge system 33) between the decompression facility 10 and the ammonia stripping facility 30, when the alkaline agent addition facility 20 is retrofitted, the pipe for supplying the alkaline agent can be connected to the connection pipe. Thereby, the alkaline agent addition facility 20 can be easily retrofitted.

### Reference Signs List

- 1: Energy gas purification device
- 2: Wastewater introduction system
- 3, 17, 34, 45, 62: Opening degree adjustment valve
- 5: Flow rate meter
- 10: Decompression facility
- 11: Decompression container
- 11a, 40a: Interior space
- 12, 26: Wastewater inlet
- 13: Alkaline agent inlet
- 14, 24, 42: Wastewater outlet
- 15: Liquid level meter
- 16, 36: Gas discharge system
- 19, 44: Pressure gauge
- 20: Alkaline agent addition facility
- 21: Alkaline agent tank
- 22: Alkaline agent introduction system
- 23, 25, 43: Gas outlet
- 30: Ammonia stripping facility
- 31: Heating facility
- 32, 39: Heat exchanger
- 33, 37: Wastewater discharge system
- 38: Pump
- 40: Tower container
- 41: Inlet
- 47: Heating part
- 51: Steam injection device
- 52: Steam injection system
- 60: Control device
- 61: pH meter
- 100, 200, 300, 400, 500: Treatment apparatus

## Claims

1. A treatment apparatus for energy gas purification wastewater for treating wastewater produced by purification of an energy gas and containing at least an ammonium ion and a chloride ion, the treatment apparatus comprising:
a decompression facility for reducing a pressure of the wastewater;
an alkaline agent addition facility for adding an alkaline agent to the wastewater whose pressure has been reduced; and
an ammonia stripping facility for stripping ammonia in the wastewater to which the alkaline agent has been added.

2. The treatment apparatus for energy gas purification wastewater according to claim 1,
wherein the decompression facility includes a decompression container having an interior space for reducing the pressure of the wastewater to be lower than a pressure upstream of the decompression facility, and
wherein the decompression container includes:
a wastewater inlet for introducing the wastewater into the interior space;
an alkaline agent inlet for introducing the alkaline agent into the interior space; and
a wastewater outlet for discharging the wastewater containing the alkaline agent and reduced in pressure.

3. The treatment apparatus for energy gas purification wastewater according to claim 2,
wherein the decompression facility is configured to reduce a pressure of the interior space to a target pressure equal to or higher than an atmospheric pressure.

4. The treatment apparatus for energy gas purification wastewater according to any one of claims 1 to 3,
wherein the alkaline agent addition facility is configured to add the alkaline agent into a connection pipe connecting the decompression facility and the ammonia stripping facility.

5. The treatment apparatus for energy gas purification wastewater according to any one of claims 1 to 4, comprising:
a pH meter for measuring a pH of the wastewater after the stripping; and
a control device for controlling an addition amount of the alkaline agent,
wherein the control device is configured to control the addition amount of the alkaline agent based on the pH measured by the pH meter.

6. The treatment apparatus for energy gas purification wastewater according to claim 5,
wherein the control device is configured to control the addition amount of the alkaline agent such that the pH measured by the pH meter is 8 to 12.

7. The treatment apparatus for energy gas purification wastewater according to any one of claims 1 to 6,
wherein the ammonia stripping facility includes a heating facility for heating the wastewater to which the alkaline agent has been added.

8. The treatment apparatus for energy gas purification wastewater according to claim 7,
wherein the heating facility includes a heat exchanger for performing heat exchange between a heating gas and the wastewater to which the alkaline agent has been added.

9. The treatment apparatus for energy gas purification wastewater according to claim 7 or 8,
wherein the heating facility includes a steam injection device for injecting steam to the wastewater to which the alkaline agent has been added.

10. The treatment apparatus for energy gas purification wastewater according to any one of claims 7 to 9,
wherein the heating facility includes a tower container, and
wherein the tower container includes:
an inlet for introducing the wastewater to which the alkaline agent has been added;
a heating part for heating the introduced wastewater;
a wastewater outlet for discharging the heated wastewater; and
a gas outlet for discharging ammonia stripped by heating of the wastewater.

11. A treatment method for energy gas purification wastewater for treating wastewater produced by purification of an energy gas and containing at least an ammonium ion and a chloride ion, the treatment method comprising:
a decompression step of reducing a pressure of the wastewater;
an alkaline agent addition step of adding an alkaline agent to the wastewater after reducing the pressure; and
an ammonia stripping step of stripping ammonia in the wastewater after adding the alkaline agent.

## Amended claims

### Amended claims under Art. 19.1 PCT

1. A treatment apparatus for energy gas purification wastewater for treating wastewater produced by purification of an energy gas and containing at least an ammonium ion and a chloride ion, the treatment apparatus comprising:
a decompression facility for reducing a pressure of the wastewater;
an alkaline agent addition facility for adding an alkaline agent to the wastewater whose pressure has been reduced; and
an ammonia stripping facility for stripping ammonia in the wastewater to which the alkaline agent has been added.

2. The treatment apparatus for energy gas purification wastewater according to claim 1,
wherein the decompression facility includes a decompression container having an interior space for reducing the pressure of the wastewater to be lower than a pressure upstream of the decompression facility, and
wherein the decompression container includes:
a wastewater inlet for introducing the wastewater into the interior space;
an alkaline agent inlet for introducing the alkaline agent into the interior space; and
a wastewater outlet for discharging the wastewater containing the alkaline agent and reduced in pressure.

3. The treatment apparatus for energy gas purification wastewater according to claim 2,
wherein the decompression facility is configured to reduce a pressure of the interior space to a target pressure equal to or higher than an atmospheric pressure.

4. The treatment apparatus for energy gas purification wastewater according to claim 1,
wherein the alkaline agent addition facility is configured to add the alkaline agent into a connection pipe connecting the decompression facility and the ammonia stripping facility.

5. The treatment apparatus for energy gas purification wastewater according to any one of claims 1 to 4, comprising:
a pH meter for measuring a pH of the wastewater after the stripping; and
a control device for controlling an addition amount of the alkaline agent,
wherein the control device is configured to control the addition amount of the alkaline agent based on the pH measured by the pH meter.

6. The treatment apparatus for energy gas purification wastewater according to claim 5,
wherein the control device is configured to control the addition amount of the alkaline agent such that the pH measured by the pH meter is 8 to 12.

7. The treatment apparatus for energy gas purification wastewater according to any one of claims 1 to 6,
wherein the ammonia stripping facility includes a heating facility for heating the wastewater to which the alkaline agent has been added.

8. The treatment apparatus for energy gas purification wastewater according to claim 7,
wherein the heating facility includes a heat exchanger for performing heat exchange between a heating gas and the wastewater to which the alkaline agent has been added.

9. The treatment apparatus for energy gas purification wastewater according to claim 7 or 8,
wherein the heating facility includes a steam injection device for injecting steam to the wastewater to which the alkaline agent has been added.

10. The treatment apparatus for energy gas purification wastewater according to any one of claims 7 to 9,
wherein the heating facility includes a tower container, and
wherein the tower container includes:
an inlet for introducing the wastewater to which the alkaline agent has been added;
a heating part for heating the introduced wastewater;
a wastewater outlet for discharging the heated wastewater; and
a gas outlet for discharging ammonia stripped by heating of the wastewater.

11. A treatment method for energy gas purification wastewater for treating wastewater produced by purification of an energy gas and containing at least an ammonium ion and a chloride ion, the treatment method comprising:
a decompression step of reducing a pressure of the wastewater;
an alkaline agent addition step of adding an alkaline agent to the wastewater after reducing the pressure; and
an ammonia stripping step of stripping ammonia in the wastewater after adding the alkaline agent.
